# EUROPEAN PATENT APPLICATION

(11) **EP 2 688 129 A1**
(43) Date of publication of application: **22.01.2014**
(21) Application number: 12758339.1
(22) Date of filing: 05.03.2012
(51) Int. Cl.: H01M 4/88, H01M 8/02, H01M 8/04, H01M 8/10

(54) **MANUFACTURING METHOD AND MANUFACTURING DEVICE FOR MEMBRANE ELECTRODE ASSEMBLY FOR POLYMER ELECTROLYTE FUEL CELL, AND POLYMER ELECTROLYTE FUEL CELL**

(30) Priority: 15.03.2011 JP 2011056764
(71) Applicant: Toppan Printing Co., Ltd., Tokyo 110-0016 (JP)
(72) Inventor: OZAWA Madoka, Tokyo 110-0016 (JP)
(74) Representative: TBK
(86) International application number: PCT/JP2012/055555
(87) International publication number: WO 2012/124518

(57) **Abstract**

[Problem] It is to provide methods and apparatuses for manufacturing, in low cost and high efficiency, a membrane electrode assembly for polymer electrolyte fuel cells without using films and the like as sub materials; the membrane electrode assembly has an electrolyte membrane on each side of which a target-shaped electrode catalyst layer with a high uniformity in membrane thickness is mounted with a low interface resistance.

[Solving means] Coating of catalyst ink is applied to a surface of a transfer roll 11 using a coating-solution supplying means 12 to form a catalyst layer. The catalyst ink contains at least proton-conducting polymer and a carbon-supported catalyst. The catalyst layer formed on the transfer roll 11 is pressed on an excess coating-solution removing roll 13 having a recess while the catalyst layer is in semi-dry state to transfer and remove an excess catalyst layer from the transfer roll 11 to a protrusion of the excess coating-solution removing roll 13. The recess has a same shape or a substantially same shape as a target pattern. A semi-dry catalyst layer having a target shape and remaining on the transfer roll 11 is pressed on a polymer electrolyte membrane 4 to bring the semi-dry catalyst layer into intimate contact with a surface of the polymer electrolyte membrane 4. The polymer electrolyte membrane 4 having each side on which the semi-dry catalyst layer has been formed is dried.

## Description

### Technical Field

The present disclosure relates to manufacturing methods and apparatuses for membrane electrode assemblies, and to polymer electrolyte fuel cells manufactured by these manufacturing methods and apparatuses.

### Background Art

Fuel cells are systems using a reaction that is the reverse of the electrolysis of water using hydrogen and oxygen to generate electricity. Because these fuel cells have high efficiency, low environmental burden, and low noise in comparison to other traditional power-generation systems, they have received a lot of attention as future clean energy-sources. Polymer electrolyte fuel cells, which can be used at room temperature or thereabout, in these fuel cells are promising as in-vehicle power sources, domestic stationary power sources, or the like, resulting in various types of research and development having been carried out.

The challenges for practical use of these polymer electrolyte fuel cells, referred to as PEM fuel cells, include finding efficient manufacturing technology of membrane electrode assemblies in low cost in addition to improving cell performance and infrastructure.

The PEM fuel cell is usually designed such that many cells are stacked. Each cell includes a membrane electrode assembly designed such that a polymer electrolyte membrane is sandwiched by an oxidation electrode and a reduction electrode. The membrane electrode assembly is sandwiched by separators each including a gas passage. In order to maintain electrical insulation between catalyst layers joined on both sides of the polymer electrolyte membrane, a typical type of membrane electrode assemblies is provided with a margin around the catalyst-layer joined area on the polymer electrolyte membrane.

As an example of methods for producing a polymer electrolyte membrane for PEM fuel cells, there is a method, which is described in the patent document 1. The method is to mount a transfer sheet, on which a target-shaped catalyst layer is formed, on each side of the polymer electrolyte membrane. Then, the method transfers the catalyst layer to the polymer electrolyte membrane.

As another example of methods for producing a polymer electrolyte membrane for PEM fuel cells, there are methods described in respective patent documents 2 and 3.

The method described in patent document 2 places a frame-shaped masking film, from which a target shape of a catalyst layer has been cut out, on a polymer electrolyte membrane, and applies a coating of catalyst ink to an area of the polymer electrolyte membrane wider than the opening. Thereafter, the method peels off the masking film from the polymer electrolyte membrane.

The method described in patent document 3 controls a coating process to apply intermittent coating of catalyst ink to a polymer electrolyte membrane.

Note that, in order to increase production efficiency, a roll-to-roll process is desirably introduced in any of the aforementioned methods.

### Citation List

### Patent Document

Patent document 1: Japanese Patent Laid-Open No. 2006-185762
Patent document 2: Japanese Patent Laid-Open No. 2010-129247
Patent document 3: Japanese Patent Laid-Open No. 2006-43505

### Summary of Invention

### Problem to be solved by Invention

The method disclosed in the patent document 1 uses a transfer sheet as a sub material. The roll-to-roll process in the method disclosed in the patent document 1 requires equipment for unwinding and recovery of the transfer sheet in addition to that for unwinding and recovery of the base material, resulting in a difficulty reducing the manufacturing cost. The method disclosed in the patent document 1 laminates the dried and solidified catalyst layer formed on the transfer sheet on an electrolyte membrane using thermo-compression bonding or the like. This may result in a difficulty keeping the electrolyte membrane and the catalyst layer in absolute contact with one another, resulting in an increase of the interface resistance.

Because the method disclosed in each of the patent documents 2 and 3 directly applies a coating of catalyst ink to an electrolyte membrane without using transfer sheets, it is expected to reduce the cost. In the method, solvent components contained in the catalyst ink cause the polymer electrolyte membrane to swell, and thereafter, the electrode catalyst layer and the polymer electrolyte membrane are dried thereby shrinking them. This may cause the electrolyte membrane to be deformed, resulting in wrinkles thereof, and cause cracking in the surface of the catalyst layer. These problems may have adverse effects on the battery performance and durability.

In addition, the method disclosed in the patent document 2 requires, as a sub material in addition to the base material, a frame-shaped masking film from which a target shape of a catalyst layer has been cut out. Thus, the method causes the manufacturing line to be complicated, resulting in a difficulty reducing the manufacturing cost.

The method disclosed in the patent document 3 controls the coating process using slit-die coating or the like to apply intermittent coating of catalyst ink. The coating process using the slit-die coating may cause the thickness of the membrane to be unstable during each of the start and end of the coating process, resulting a difficulty obtaining a uniform thickness of the coated membrane over its entire surface. In addition, in the method disclosed in the patent document 3, there may be contamination of air bubbles or foreign particles into the membrane during the start of the coating process, resulting in non-uniform thickness of the coated membrane.

Using such a coated membrane as an electrode catalyst layer may reduce power-generation performance, and cause damage to the electrolyte membrane to reduce its durability. Applying a coating of catalyst ink using intermittent die-coating may limit the shape of the coating to a substantially rectangular shape.

In order to solve these problems, the present invention aims to provide methods and apparatuses for manufacturing, in low cost and high efficiency, a membrane electrode assembly for polymer electrolyte fuel cells without using films and the like as sub materials; the membrane electrode assembly has an electrolyte membrane, on each side of which a target-shaped electrode catalyst layer with a high uniformity in membrane thickness is mounted, with a low interface resistance.

### Means for solving problem

An invention described in claim 1 in the present invention for solving the problems is a manufacturing method of a membrane electrode assembly for a polymer electrolyte fuel cell. The membrane electrode assembly has a polymer electrolyte membrane with each side on which an electrode catalyst layer is formed. The manufacturing method includes a catalyst-ink applying step that applies a coating of catalyst ink to a surface of a transfer roll using a coating-solution supplying means to form a catalyst layer. The catalyst ink contains at least proton-conducting polymer and a carbon-supported catalyst. The manufacturing method includes a transfer and removal step that presses the catalyst layer formed by the catalyst-ink applying step on an excess coating-solution removing roll having a recessed portion while the catalyst layer is in semi-dry state to transfer and remove an excess catalyst layer from the transfer roll to a protruded portion of the excess coating-solution removing roll. The recessed portion has a same shape or a substantially same shape as a target pattern. The manufacturing method includes a semi-dry catalyst layer intimate-contact step that presses, on a polymer electrolyte membrane, a semi-dry catalyst layer that has a target shape and has not been removed by the transfer and removal step so as to remain on the transfer roll, thus bringing the semi-dry catalyst layer into intimate contact with a surface of the polymer electrolyte membrane. The manufacturing method includes a polymer-electrolyte membrane drying step that dries the polymer electrolyte membrane having the semi-dry catalyst layer formed by the semi-dry catalyst layer intimate-contact step.

An invention described in claim 2 in the present invention, which depends on claim 1, is that the transfer roll and the excess coating-solution removing roll turn at a same speed in opposite directions.

An invention described in claim 3 in the present invention, which depends on claim 2, is that excess coating solution is removed from the excess coating-solution removing roll using an excess coating-solution removing roll cleaning means.

An invention described in claim 4 in the present invention, which depends on claim 3, is that cleaning of the excess coating-solution removing roll and drying of the cleaned excess coating-solution removing roll are performed using the excess coating-solution removing roll cleaning means.

An invention described in claim 5 in the present invention, which depends on claim 4, is that a slit-die coater is used as the coating-solution supplying means.

An invention described in claim 6 in the present invention, which depends on claim 5, is that the transfer roll is heated using a heating means.

An invention described in claim 7 in the present invention, which depends on claim 6, is that the surface of the transfer roll is made from a material composed of a fluorinated compound.

An invention described in claim 8 in the present invention, which depends on claim 7, is that the coating-solution supplying means intermittently applies a coating of the catalyst ink to the surface of the transfer roll.

An invention described in claim 9 in the present invention, which depends on claim 8, is that the transfer roll is a plurality of transfer rolls, and the excess coating-solution removing roll is a plurality of excess coating-solution removing rolls.

An invention described in claim 10 in the present invention is a polymer electrolyte fuel cell including a membrane electrode assembly for a polymer electrolyte fuel cell, the membrane electrode assembly being manufactured by the manufacturing method according to claim 9.

An invention described in claim 11 in the present invention is a manufacturing apparatus of a membrane electrode assembly for a polymer electrolyte fuel cell. The membrane electrode assembly has a polymer electrolyte membrane with each side on which an electrode catalyst layer is formed. The manufacturing apparatus includes a transfer roll having a surface on which a target-shaped semi-dry catalyst layer is formed, the transfer roll pressing the semi-dry catalyst layer on a polymer electrolyte membrane to bring the semi-dry catalyst layer into intimate contact with a side of the polymer electrolyte membrane. The manufacturing apparatus includes a coating-solution supplying means that applies a coating of catalyst ink on a surface of the transfer roll to form a catalyst layer. The manufacturing apparatus includes an excess coating-solution removing roll with a recess having a same shape or a substantially same shape as a target pattern. The excess coating-solution removing roll transfers and removes an excess catalyst layer from the transfer roll while the catalyst layer formed by the catalyst-ink supplying means is pressed in semi-dry state to the excess coating-solution removing roll. The manufacturing apparatus includes a drying means that dries the polymer electrolyte membrane having the semi-dry catalyst layer.

An invention described in claim 12 in the present invention, which depends on claim 11, is that the transfer roll and the excess coating-solution removing roll turn at a same speed in opposite directions.

An invention described in claim 13 in the present invention, which depends on claim 12, further includes an excess coating-solution removing roll cleaning means that removes excess coating solution from the excess coating-solution removing roll.

An invention described in claim 14 in the present invention, which depends on claim 13, is that the excess coating-solution removing roll cleaning means includes:
a cleaning means of the excess coating-solution removing roll; and
a drying means of the cleaned excess coating-solution removing roll.
An invention described in claim 15 in the present invention, which depends on claim 14, is that the coating-solution supplying means is a slit-die coater.

An invention described in claim 16 in the present invention, which depends on claim 15, is that the transfer roll comprises a heating means that heats the transfer roll.

An invention described in claim 17 in the present invention, which depends on claim 16, is that the transfer roll is designed such that the surface thereof is made from a material composed of a fluorine compound.

An invention described in claim 18 in the present invention, which depends on claim 17, is that the coating-solution supplying means intermittently applies a coating of the catalyst ink to the surface of the transfer roll.

An invention described in claim 19 in the present invention, which depends on claim 18, is that the transfer roll is a plurality of transfer rolls, and the excess coating-solution removing roll is a plurality of excess coating-solution removing rolls.

An invention described in claim 20 in the present invention is that a polymer electrolyte fuel cell including a membrane electrode assembly for a polymer electrolyte fuel cell. The membrane electrode assembly is manufactured by the manufacturing apparatus according to claim 19.

### Effect of the invention

The invention recited in claim 1 makes it possible to provide a membrane electrode assembly for polymer electrolyte fuel cells, on each side of which a target-shaped electrode catalyst layer is mounted, with a low interface resistance. The invention recited in claim 1 also makes it possible to provide a membrane electrode assembly for polymer electrolyte fuel cells, which reduces the swelling of the polymer electrolyte membrane due to solvent components contained in the catalyst ink, and prevents wrinkles in the electrolyte membrane and cracks in the surface of the catalyst layer. In addition, the invention recited in claim 1 makes it possible to provide, with low cost and high efficiency, a membrane electrode assembly for polymer electrolyte fuel cells without using transfer sheets, masking films, and the like as sub materials.

The invention recited in claim 2 makes it possible to transfer and remove the excess catalyst layer from the transfer roll without preventing the excess coating-solution removing roll from interrupting the motion of the transfer roll.

The invention recited in claim 3 makes it possible to repeatedly use the excess coating-solution removing roll.

The invention recited in claim 4 enables cleaning liquid and solvent components to be surely removed from the cleaned excess coating-solution removing roll, making it possible to repeatedly use the excess coating-solution removing roll.

The invention recited in claim 5 makes it possible to provide a membrane electrode assembly for polymer electrolyte fuel cells, which is provided with an electrode catalyst layer having a high membrane-thickness uniformity.

The invention recited in claim 6 makes it possible to suitably remove solvent components contained in the catalyst ink while the transfer roll is turned to thereby easily form a semi-dry catalyst layer. The invention recited in claim 6 also enables the transferring performance from the transfer roll to the electrolyte membrane to be improved.

The invention recited in claim 7 makes it possible to improve the separation ability of the semi-dry catalyst layer from the transfer roll, thus reliably transferring and removing the excess catalyst layer and the target-shaped semi-dry catalyst layer from the transfer roll.

The invention recited in claim 8 results in reduction of the consumed amount of the catalyst ink, thus further reducing the cost.

The invention recited in claim 9 enables the electrode catalyst layer to be formed simultaneously on both sides of the electrolyte membrane. This makes it possible to provide a membrane electrode assembly for polymer electrolyte fuel cells in higher efficiency.

The invention recited in claim 10 makes it possible to obtain, at low cost, a polymer electrolyte fuel cell having excellent power-generation efficiency and durability.

The invention recited in claim 11 makes it possible to provide a membrane electrode assembly for polymer electrolyte fuel cells, on each side of which a target-shaped electrode catalyst layer is mounted, with a low interface resistance. The invention recited in claim 11 also makes it possible to provide a manufacturing apparatus capable of manufacturing a membrane electrode assembly for polymer electrolyte fuel cells, which reduces the swelling of the polymer electrolyte membrane due to solvent components contained in the catalyst ink, and prevents wrinkles in the electrolyte membrane and cracks in the surface of the catalyst layer. In addition, the invention recited in claim 11 makes it possible to provide a manufacturing apparatus capable of manufacturing, with low cost and high efficiency, a membrane electrode assembly for polymer electrolyte fuel cells without using transfer sheets, masking films, and the like as sub materials.

The invention recited in claim 12 makes it possible to transfer and remove the excess catalyst layer from the transfer roll without preventing the excess coating-solution removing roll from interrupting the motion of the transfer roll.

The invention recited in claim 13 makes it possible to repeatedly use the excess coating-solution removing roll.

The invention recited in claim 14 enables cleaning liquid and solvent components to be surely removed from the cleaned excess coating-solution removing roll, making it possible to repeatedly use the excess coating-solution removing roll.

The invention recited in claim 15 makes it possible to provide a manufacturing apparatus capable of manufacturing a membrane electrode assembly for polymer electrolyte fuel cells, which is provided with an electrode catalyst layer having a high membrane-thickness uniformity.

The invention recited in claim 16 makes it possible to suitably remove solvent components contained in the catalyst ink while the transfer roll is turned to thereby easily form a semi-dry catalyst layer. The invention recited in claim 6 also enables the transferring performance from the transfer roll to the electrolyte membrane to be improved.

The invention recited in claim 17 makes it possible to improve the separation ability of the semi-dry catalyst layer from the transfer roll, thus reliably transferring and removing the excess catalyst layer and the target-shaped semi-dry catalyst layer from the transfer roll.

The invention recited in claim 18 results in reduction of the consumed amount of the catalyst ink, thus further reducing the cost.

The invention recited in claim 19 enables the electrode catalyst layer to be formed simultaneously on both sides of the electrolyte membrane. This makes it possible to more efficiently provide a manufacturing apparatus capable of manufacturing a membrane electrode assembly for polymer electrolyte fuel cells.

The invention recited in claim 20 makes it possible to obtain, at low cost, a polymer electrolyte fuel cell having excellent power-generation efficiency and durability.

### Brief Description of Drawings

Fig. 1 is a view showing the schematic structure of a manufacturing apparatus for a membrane electrode assembly for polymer electrolyte fuel cells according to a first embodiment;
Fig. 2 is a view explaining a manufacturing method of membrane electrode assemblies according to the first embodiment; and
Fig. 3 is a view explaining a manufacturing method of membrane electrode assemblies in intermittent coating according to this embodiment.

### Description of Embodiment

### (First embodiment)

A first embodiment of the present invention, which will be referred to as this embodiment, will be described hereinafter with reference to the accompanying drawings. Note that this embodiment is an example of the present invention, and therefore it does not limit the present invention.

The present invention provides methods for manufacturing membrane electrode assemblies of polymer electrolyte fuel cells, and apparatuses for manufacturing the same.

Specifically, coating of catalyst ink, which includes at least a proton-conducting polymer, a carbon-supported catalyst, and a solvent, is applied to the surface of a transfer roll by a coating-solution supplying means to form a catalyst layer. The catalyst layer on the transfer roll is pressed in a semi-dry state onto an excess coating-solution removing roll with a recessed portion, i.e. recesses, having a same shape or a substantially same shape as a target pattern. Note that the target pattern is, for example, a pattern required to form the shape of a catalyst layer to be formed on a side of a polymer electrolyte membrane to a desired shape. In addition, the phrase "substantially same shape" means that the shape of recesses of the excess coating-solution removing roll need not match strictly the shape of a catalyst layer to be formed on a side of a polymer electrolyte membrane. That is, the phrase "substantially same shape" can include any shape that substantially matches the shape of a catalyst layer as long as the shape of portions of the excess coating-solution removing roll can form the shape of a desired-patterned catalyst layer.

In addition to the processes, an excess catalyst layer of the transfer roll is transferred to a protruded portion, i.e. protrusions, to be removed from the transfer roll. The semi-dry catalyst layer having a target shape and remaining on the transfer roll is pressed onto a polymer electrolyte membrane to be intimate contact on the sides of the polymer electrolyte membrane. Thereafter, the polymer electrolyte membrane, each side of which has been formed with an electrode catalyst layer, is dried. Note that the semi-dry catalyst layer having a target shape is a semi-dry catalyst layer having a shape required to form the shape of a catalyst layer to a desired shape.

The above descriptions provide methods and apparatuses for manufacturing, in low cost and high efficiency, membrane electrode assemblies with a low interface resistance for polymer electrolyte fuel cells without using films or the like as sub materials; each of the membrane electrode assemblies has an electrolyte membrane, each side of which has been formed with an electrode catalyst layer having a target shape and a high membrane-thickness uniformity.

### (Structure)

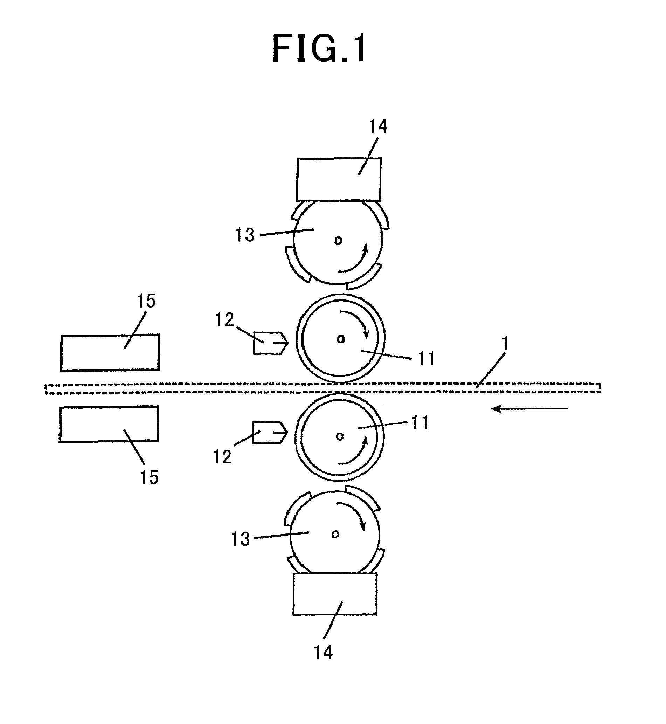

The structure of a manufacturing apparatus for a membrane electrode assembly for polymer electrolyte fuel cells according to this embodiment will be described first with reference to Fig. 1.

Fig. 1 is a view showing the schematic structure of the manufacturing apparatus for a membrane electrode assembly for polymer electrolyte fuel cells according to this embodiment.

Referring to Fig. 1, in the manufacturing apparatus, transfer rolls 11 for respective anode and cathode electrodes are disposed across a place 1 through which polymer electrolyte membranes pass. The transfer rolls 11 preferably turns at a same speed in opposite directions, but they are not limited thereto.

As polymer electrolyte membranes and proton-conducting polymers, various materials can be used. In view of interface resistance between electrolyte membranes and electrodes, and the rate of change in dimension of electrodes and electrolyte membranes during variation in humidity, an electrolyte membrane to be used and a proton-conducting polymer in a catalyst layer to be used preferably have same ingredients.

Proton-conducting polymers usable for membrane electrode assemblies for polymer electrolyte fuel cells according to the present invention have proton conductivity. Fluorine polymer electrolytes or hydrocarbon polymer electrolytes can be used as such proton-conducting polymers. As a fluorine polymer electrolyte, Nafion® manufactured by DuPont, Flemion® manufactured by Asahi Glass Co., Ltd, Gore Select® manufactured by Gore, or the like can be used.

As a hydrocarbon polymer electrolyte, sulfonated polyether ketone, sulfonated polyether sulfone, sulfonated polyether ether sulfone, sulfonated polysulfide, sulfonated polyphenylene, or the like can be used. Particularly, as a hydrocarbon polymer electrolyte, DuPont's Nafion® materials can be preferably used.

The surface of each transfer roll 11 can be made from a fluorine resin having good transfer characteristics can be used. Fluorine resins having good transfer characteristics include ethylene/tetrafluoroethylene copolymer (ETFE), fluorinated ethylene propylene copolymer (FEP), tetra-fluoro-perfluoro alkyl vinyl ether copolymer (PFA), polytetra-fluoro-ethylene (PTFE), and the like. The surface of each transfer roll 11 can also be made from silicon rubber, fluorinated rubber, or the like.

A coating-solution supplying means 12 and an excess coating-solution removing roll 13 are disposed at a region opposite to the place 1, through which polymer electrolyte membranes pass, across each transfer roll 11; the coating-solution supplying means 12 is to apply catalyst ink to a corresponding transfer roll 11.

As catalysts used for the present invention, (i) the platinum group elements, which include platinum, palladium, ruthenium, iridium, rhodium, and osmium, (ii) metals, such as iron, lead, copper, chrome, cobalt, nickel, manganese, vanadium, molybdenum, gallium, aluminum, and so on, (iii) alloys of these, (iv) oxides of these, (v) multiple oxides of these, or (vi) carbides of these can be used.

As carbons bearing these catalysts used for the present invention, any types of finely powdered conductive carbons resistant to the catalysts can be used. Preferably, carbon-black, graphite, black lead, activated carbon, carbon nanotubes, or fullerene can be used as carbons bearing these catalysts. Any solvents can be used as dispersion media of catalyst ink as long as they do not corrode catalyst particles and proton-conducting polymers, and permit proton-conducting polymers to: dissolve while the proton-conducting polymers are kept in a highly liquid state, or be dispersed as fine gels. These solvents can contain water compatible with proton-conducting polymers. In this case, the amount of water is unlimited unless proton-conducting polymers are separated to become cloudy or become gels.

In addition, at least a volatile organic liquid solvent is preferably contained in these solvents. In this case, if a solvent containing lower alcohol is used as these solvents, the mixture of lower alcohol and water is preferably used because such a solvent containing lower alcohol has a high risk of firing.

The coating-solution supplying means 12 can use various coating methods, such as die coating, roll coating, curtain coating, spray coating, squeegeeing, and the like. Preferably, the coating-solution supplying means 12 can use die coating, which offers uniform thickness of the middle of the coated membrane and is able to perform intermittent coating.

On the surface of the excess coating-solution removing roll 13, recesses, which have a same shape or a substantially same shape as a target pattern, are formed. The excess coating-solution removing roll 13 and the corresponding transfer roll 11 turn in opposite directions at equal speed.

The surface of the excess coating-solution removing roll 13 can be formed by a metal, a resin, or a composite material of them, but it is not limited to these materials. A cushion layer can be formed at the inner side of the surface layer.

An excess coating-solution removing roll cleaning means 14, referred to as a cleaning means 14, is disposed at one side of each excess coating-solution removing roll 13 opposite to the side of a corresponding transfer roll 11. Drying means 15 are disposed at the front of the passing direction of polymer electrolyte membranes. It is actually possible for polymer electrolyte membranes to flow during a roll-to-roll process.

### (Manufacturing method of membrane electrode assemblies)

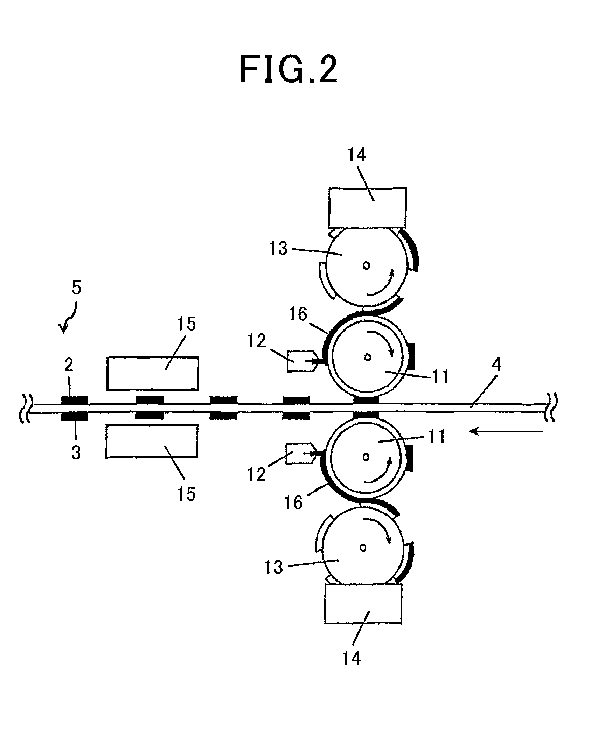

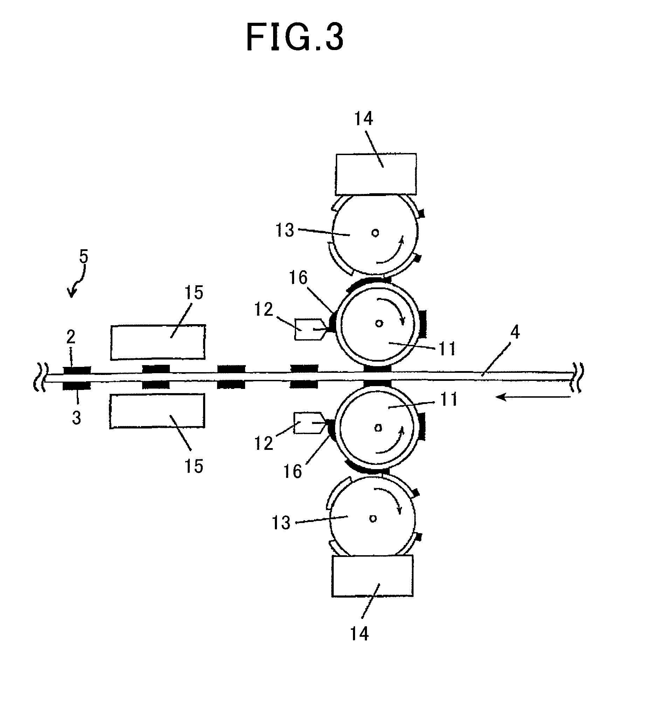

Next, a manufacturing method of membrane electrode assemblies according to this embodiment, referred to simply as a manufacturing method, will be described hereinafter with reference to Figs. 2 and 3 with the aid of Fig. 1.

Fig. 2 is a view explaining the manufacturing method of membrane electrode assemblies according to this embodiment.

Referring to Fig. 2, the manufacturing method membrane electrode assemblies performs a catalyst-ink applying process that applies a coating of catalyst ink 16 to the surface of a rotating transfer roll 11 by a corresponding coating-solution supplying means 12 to form a catalyst layer. The transfer roll 11 has a heating means, and the heating means heats the surface of the transfer roll 11, resulting in the applied catalyst ink 16 being in semi-dry state on the surface of the transfer roll 11. The solid concentration of the catalyst ink 16 in the semi-dry state is equal to or higher than 30.0 % by weight and equal to or lower than 99.9 % by weight. Preferably, the solid concentration of the catalyst ink 16 in the semi-dry state is equal to or higher than 60.0 % by weight and equal to or lower than 99.9 % by weight.

When a transfer roll 11 with the semi-dry catalyst layer formed on the surface thereof turns to reach a position at which the semi-dry catalyst layer abuts on a corresponding excess coating-solution removing roll 13, rotation of the transfer roll 11 while pressing the excess coating-solution removing roll 13 causes an excess semi-dry catalyst layer to be transferred to one of protrusions formed on the surface of the excess coating-solution removing roll 13, resulting in removal of the excess semi-dry catalyst layer from the surface of the transfer roll 11 in a transfer and removal process. As a result, a target-shaped semi-dry catalyst layer is formed on the surface of the transfer roll 11.

When the transfer roll 11 further turns to reach a position at which the target-shaped semi-dry catalyst layer abuts on a polymer electrolyte membrane 4, rotation of the transfer roll 11 while pressing the polymer electrolyte membrane 4 causes the target-shaped semi-dry catalyst layer formed on the surface of the transfer roll 11 to be transferred to one side of the polymer electrolyte membrane 4, resulting in removal of the target-shaped semi-dry catalyst layer from the surface of the transfer roll 11.

Specifically, each of the transfer rolls 11 for respective anode and cathode electrodes presses the polymer electrolyte membrane 4 to bring the target-shaped semi-dry catalyst layer into intimate contact on a corresponding side of the polymer electrolyte membrane 4 in semi-dry catalyst layer intimate-contact process. This simultaneously forms an anode electrode catalyst layer and a cathode electrode catalyst layer on both sides of the polymer electrolyte membrane 4.

Note that it is preferable to simultaneously form an anode electrode catalyst layer and a cathode electrode catalyst layer using the transfer rolls 11 for the respective anode and cathode electrodes in view of high efficient manufacturing. However, the anode and cathode electrodes can be formed separately. In this case, for example, one transfer roll 11 for one of the anode and cathode electrodes presses one side of the polymer electrolyte membrane 4 while another roll presses the other side, thus forming one of the anode and cathode electrodes.

The pressure exerted on an electrode catalyst layer while the polymer electrolyte membrane 4 is pressed by a transfer roll 11 has an impact on the battery performance of a membrane electrode assembly. For this reason, in order to obtain a membrane electrode assembly with a high battery performance, the pressure between the rolls is preferably set within the range from 0.5 MPa to equal to or less than 20 MPa, and more preferably, from 2 MPa to equal to or less than 15 MPa. If the pressure were over this range, the electrolyte catalyst layer could be excessively pressed. If the pressure were below this range, the bond-ability between the electrode catalyst layer and the polymer electrolyte membrane could be reduced, resulting in reduction of the battery performance.

When the polymer electrolyte membrane having the semi-dry catalyst layers on each side thereof passes through the dry means 15 located toward the polymer electrolyte membrane, the solvent components contained in the catalyst layers are removed in polymer electrolyte-membrane drying process. This achieves a membrane electrode assembly 5 having the anode catalyst layers 2 and the cathode catalyst layers 3 formed on respective sides of the polymer electrolyte membrane 4.

On the other hand, the excess coating-solution removing roll 13, which has removed the excess semi-dry catalyst layers transferred from the transfer roll 11, passes through the cleaning means 14, so that catalyst layers attached on the protrusions are cleaned. This brings the excess coating-solution removing roll 13 to return to the state in which it can remove excess catalyst layers.

Fig. 3 is a view explaining a manufacturing method of membrane electrode assemblies in intermittent coating according to this embodiment.

Referring to Fig. 3, the manufacturing method of membrane electrode assemblies according to this embodiment intermittently applies a coating of catalyst ink to a transfer roll 11 to form catalyst layers. This achieves an effect of reducing catalyst ink to be removed by the protrusions of a corresponding excess coating-solution removing roll 13. This results in reduction of the amount of catalyst ink used and that of the load on a cleaning process of the excess coating-solution removing rolls 13, thus reducing the manufacturing cost.

### (Examples)

Next, let us describe the comparison results between the physical properties of a membrane electrode assembly for polymer electrolyte fuel cells according to an example of the present invention and those of membrane electrode assemblies for polymer electrolyte fuel cells according to comparative examples.

Note that, as the comparative examples, two membrane electrode assemblies for polymer electrolyte fuel cells, which were manufactured by different manufacturing methods, are used. Hereinafter, the two membrane electrode assemblies for polymer electrolyte fuel cells, which were manufactured by the respective different manufacturing methods, will be referred to as a first comparative example and a second comparative example.

### (Example of the present invention)

The membrane electrode assembly for polymer electrolyte fuel cells according to an example of the present invention was manufactured by the same manufacturing method as that described in the aforementioned embodiment.

Specifically, a carbon-supported platinum catalyst, whose trade name is "TEC10E50E", manufactured by Tanaka Kikinzoku Kogyo, a mixed solvent of water and ethanol, and a polyelectrolyte solution, whose registered trade mark is "Nafion" from DuPont, were mixed, and the mixture was subjected to a dispersion process by a planetary ball mill, so that catalyst ink was prepared.

Thereafter, coating of the prepared catalyst ink was applied to a rotating transfer roll by a slit-die coater. At that time, the catalyst ink on the surface of the transfer roll maintained at 80 °C got to be in semi-dry state during rotation.

Next, the transfer roll was turned while it was in abutment with an excess coating-solution removing roll 13 having substantially rectangular recesses. This removed excess ink around the substantially rectangular portions from the transfer roll. These coating process and excess coating-solution removing process were performed for each of anode and cathode transfer rolls, so that a semi-dry catalyst layer was formed on the surface of each of the transfer rolls.

Thereafter, the transfer rolls set forth above were located such that their catalyst layers respectively faced both sides of a polymer electrolyte membrane, whose registered trade mark is "Nafion 212" manufactured by DuPont, and pressed them. Then, the transfer rolls were turned at a same speed in opposite directions, so that the semi-dry catalyst layer formed on the surface of each transfer roll 11 was transferred to the polymer electrolyte membrane. The polymer electrolyte membrane, each side of which has been formed with the semi-dry catalyst layer, were passed through an IR oven maintained at 100 °C so as to be dried. As a result, the membrane electrode assembly for polymer electrolyte fuel cells according to the example of the present invention were manufactured.

### (First comparative example)

In manufacturing the membrane electrode assembly for polymer electrolyte fuel cells according to the first comparative example, coating of catalyst ink identical to that according to the example of the present invention was applied to one side of a polymer electrolyte membrane, whose registered trade mark is "Nafion 212" manufactured by DuPont, by a slit-die coater. For the coating process, controlling the supply system of the application liquid intermittently applied coating of the catalyst ink to a substantially rectangular shape.

Thereafter, the polymer electrolyte membrane formed with the aforementioned catalyst layer was dried by an oven maintained at 80 °C. After the drying process, coating of the catalyst ink was applied to the other side of the polymer electrolyte membrane so that a catalyst layer faces the other side thereof in the same manner as the aforementioned process. The polymer electrolyte membrane formed with the catalyst layers was dried by an oven maintained at 100 °C. As a result, the membrane electrode assembly for polymer electrolyte fuel cells according to the first comparative example was manufactured.

### (Second comparative example)

In manufacturing the membrane electrode assembly for polymer electrolyte fuel cells according to the second comparative example, on the surface of a PTFE sheet, a masking film, from which substantially rectangular portions have been cut out, was placed. Coating of the same catalyst ink as that according to the example of the present invention was applied to the surface of the PTFE sheet. Then, the PTFE sheet was dried by an oven maintained at 100 °C, and thereafter, the masking film was peeled off from the PTFE sheet, so that a transferring base material was manufactured.

Two transferring base materials manufactured set forth above were prepared. The transferring base materials were located such that their catalyst layers respectively faced both sides of a polymer electrolyte membrane, whose registered trade mark is "Nafion 212" manufactured by DuPont, and thereafter, they were hot-pressed. After the hot-press, the PTFE sheet was peeled off from each of the transferring base materials, so that the membrane electrode assembly for polymer electrolyte fuel cells according to the second comparative example was manufactured.

### (Results of comparison)

The example of the present invention obtained the membrane electrode assembly, each side of which has been formed with a target-shaped electrode catalyst layer having a high membrane-thickness uniformity and no cracks, for polymer electrolyte fuel cells.

In contrast, in the first comparative example, solvent components contained in the catalyst ink caused the polymer electrolyte membrane to swell, and thereafter to shrink, resulting in wrinkles, cracks in the catalyst layer, and waviness in the obtained membrane electrode assembly for polymer electrolyte fuel cells. In addition, intermittent application of coating of the catalyst ink caused the membrane thickness to be wider during the start of the coating process, resulting in deterioration of the membrane-thickness uniformity and shape of the electrode catalyst layer.

In the second comparative example, the resistance of the obtained membrane electrode assembly for polymer electrolyte fuel cells is slightly higher than that of the obtained membrane electrode assembly for polymer electrolyte fuel cells according to the example of the present invention. In addition, the masking film and the PTFE sheet were needed as disposable sub materials in manufacturing the membrane electrode assembly for polymer electrolyte fuel cells.

### Industrial applicability

The manufacturing method according to the present invention makes it possible to obtain, with low cost and high efficiency, membrane electrode assemblies for polymer electrolyte fuel cells without using films and the like as sub materials; each of the membrane electrode assemblies has an electrolyte membrane on each side of which a target-shaped electrode catalyst layer.

In addition, a membrane electrode assembly for polymer electrolyte fuel cells manufactured by the manufacturing method according to the present invention reduce the increase of the interface resistance between the electrode catalyst layer and the polymer electrolyte membrane, and the occurrence of wrinkles in the electrolyte membrane or cracks in the surface of the catalyst layer, resulting in excellent power-generation efficiency and durability.

Thus, the present invention has characteristics suitably used for fuel cells using polymer electrolyte membranes, particularly for stationary co-generation systems or electric vehicles. The present invention has a great deal of potential in industry because it can further reduce cost.

### Description of characters

- 1: Place through which polymer electrolyte membranes pass
- 2: Anode catalyst layer
- 3: Cathode catalyst layer
- 4: Polymer electrolyte membrane
- 5: Membrane electrode assembly for polymer electrolyte fuel cells
- 11: Transfer roll
- 12: Coating-solution supplying means
- 13: Excess coating-solution removing roll
- 14: Excess coating-solution removing roll cleaning means
- 15: Drying means
- 16: Catalyst ink

## Claims

1. A manufacturing method of a membrane electrode assembly for a polymer electrolyte fuel cell, the membrane electrode assembly having a polymer electrolyte membrane on each side of which an electrode catalyst layer is formed, the manufacturing method comprising:
a catalyst-ink applying step that applies a coating of catalyst ink to a surface of a transfer roll using a coating-solution supplying means to form a catalyst layer, the catalyst ink containing at least proton-conducting polymer and a carbon-supported catalyst;
a transfer and removal step that presses the catalyst layer formed by the catalyst-ink applying step on an excess coating-solution removing roll having a recessed portion while the catalyst layer is in semi-dry state to transfer and remove an excess catalyst layer from the transfer roll to a protruded portion of the excess coating-solution removing roll, the recessed portion having a same shape or a substantially same shape as a target pattern;
a semi-dry catalyst layer intimate-contact step that presses, on a polymer electrolyte membrane, a semi-dry catalyst layer that has a target shape and has not been removed by the transfer and removal step so as to remain on the transfer roll, thus bringing the semi-dry catalyst layer into intimate contact with a surface of the polymer electrolyte membrane; and
a polymer-electrolyte membrane drying step that dries the polymer electrolyte membrane having the semi-dry catalyst layer formed by the semi-dry catalyst layer intimate-contact step.

2. The manufacturing method of a membrane electrode assembly for a polymer electrolyte fuel cell according to claim 1, wherein the transfer roll and the excess coating-solution removing roll turn at a same speed in opposite directions.

3. The manufacturing method of a membrane electrode assembly for a polymer electrolyte fuel cell according to claim 2, wherein excess coating solution is removed from the excess coating-solution removing roll using an excess coating-solution removing roll cleaning means.

4. The manufacturing method of a membrane electrode assembly for a polymer electrolyte fuel cell according to claim 3, wherein cleaning of the excess coating-solution removing roll and drying of the cleaned excess coating-solution removing roll are performed using the excess coating-solution removing roll cleaning means.

5. The manufacturing method of a membrane electrode assembly for a polymer electrolyte fuel cell according to claim 4, wherein a slit-die coater is used as the coating-solution supplying means.

6. The manufacturing method of a membrane electrode assembly for a polymer electrolyte fuel cell according to claim 5, wherein the transfer roll is heated using a heating means.

7. The manufacturing method of a membrane electrode assembly for a polymer electrolyte fuel cell according to claim 6, wherein the surface of the transfer roll is made from a material composed of a fluorinated compound.

8. The manufacturing method of a membrane electrode assembly for a polymer electrolyte fuel cell according to claim 7, wherein the coating-solution supplying means intermittently applies a coating of the catalyst ink to the surface of the transfer roll.

9. The manufacturing method of a membrane electrode assembly for a polymer electrolyte fuel cell according to claim 8, wherein the transfer roll is a plurality of transfer rolls, and the excess coating-solution removing roll is a plurality of excess coating-solution removing rolls.

10. A polymer electrolyte fuel cell comprising:
a membrane electrode assembly for a polymer electrolyte fuel cell, the membrane electrode assembly being manufactured by the manufacturing method according to claim 9.

11. A manufacturing apparatus of a membrane electrode assembly for a polymer electrolyte fuel cell, the membrane electrode assembly having a polymer electrolyte membrane with each side on which an electrode catalyst layer is formed, the manufacturing apparatus comprising:
a transfer roll having a surface on which a target-shaped semi-dry catalyst layer is formed, the transfer roll pressing the semi-dry catalyst layer on a polymer electrolyte membrane to bring the semi-dry catalyst layer into intimate contact with a side of the polymer electrolyte membrane;
a coating-solution supplying means that applies a coating of catalyst ink on a surface of the transfer roll to form a catalyst layer;
an excess coating-solution removing roll with a recess having a same shape or a substantially same shape as a target pattern, the excess coating-solution removing roll transferring and removing an excess catalyst layer from the transfer roll while the catalyst layer formed by the catalyst-ink supplying means is pressed in a semi-dry state to the excess coating-solution removing roll; and
a drying means that dries the polymer electrolyte membrane having the semi-dry catalyst layer.

12. The manufacturing apparatus of a membrane electrode assembly for a polymer electrolyte fuel cell according to claim 11, wherein the transfer roll and the excess coating-solution removing roll turn at a same speed in opposite directions.

13. The manufacturing apparatus of a membrane electrode assembly for a polymer electrolyte fuel cell according to claim 12, further comprising:
an excess coating-solution removing roll cleaning means that removes excess coating solution from the excess coating-solution removing roll.

14. The manufacturing apparatus of a membrane electrode assembly for a polymer electrolyte fuel cell according to claim 13, wherein the excess coating-solution removing roll cleaning means comprises:
cleaning means of the excess coating-solution removing roll; and
drying means of the cleaned excess coating-solution removing roll.

15. The manufacturing apparatus of a membrane electrode assembly for a polymer electrolyte fuel cell according to claim 14, wherein the coating-solution supplying means is a slit-die coater.

16. The manufacturing apparatus of a membrane electrode assembly for a polymer electrolyte fuel cell according to claim 15, wherein the transfer roll comprises a heating means that heats the transfer roll.

17. The manufacturing apparatus of a membrane electrode assembly for a polymer electrolyte fuel cell according to claim 16, wherein the transfer roll is designed such that the surface thereof is made from a material composed of a fluorine compound.

18. The manufacturing apparatus of a membrane electrode assembly for a polymer electrolyte fuel cell according to claim 17, wherein the coating-solution supplying means intermittently applies a coating of the catalyst ink to the surface of the transfer roll.

19. The manufacturing apparatus of a membrane electrode assembly for a polymer electrolyte fuel cell according to claim 18, wherein the transfer roll is a plurality of transfer rolls, and the excess coating-solution removing roll is a plurality of excess coating-solution removing rolls.

20. A polymer electrolyte fuel cell comprising:
a membrane electrode assembly for a polymer electrolyte fuel cell, the membrane electrode assembly being manufactured by the manufacturing apparatus according to claim 19.
